# FASCICULE DE BREVET EUROPEEN

(11) **EP 2 139 129 B1**
(45) Date de publication et mention de la délivrance du brevet: **27.03.2013**
(21) Numéro de dépôt: 09305539.0
(22) Date de dépôt: 12.06.2009
(51) Int. Cl.: H04B 10/2513, H04B 10/2543

(54) **Procédé de limitation du bruit de phase non-lineaire d'un signal optique module en phase a amplitude constante et dispositif associé**
Verfahren zur Einschränkung des nicht-linearen Phasengeräuschs eines phasenmodulierten optischen Signals mit konstanter Amplitude und entsprechende Vorrichtung
Method for reducing the non-linear phase noise in a phase-modulated optical signal with constant amplitude and associated device

(30) Priorité: 27.06.2008 FR 0854307
(43) Date de publication de la demande: 30.12.2009
(73) Titulaire: FRANCE TELECOM, 75015 Paris (FR)
(72) Inventeur: Pincemin, M. Erwan, 22290, GOMMENEC'H (FR); Gosset, Christophe, 91700, SAINTE GENEVIEVE DES BOIS (FR)

(56) Documents cités:
- EP-A- 1 079 552
- JP-A- 2000 031 901
- MATSUMOTO M: "Performance Improvement of Phase-Shift-Keying Signal Transmission By Means of Optical Limiters Using Four-Wave Mixing in Fibers" JOURNAL OF LIGHTWAVE TECHNOLOGY, IEEE SERVICE CENTER, NEW YORK, NY, US, vol. 23, no. 9, 1 septembre 2005 (2005-09-01), pages 2696-2701, XP011138934 ISSN: 0733-8724
- SKOLD M ET AL: "Constellation diagram measurements of induced phase noise in a regenerating parametric amplifier" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 février 2008 (2008-02-24), pages 1-3, XP031391465 ISBN: 978-1-55752-856-8

## Description

### 1. Domaine de l'invention

Le domaine de l'invention est celui des télécommunications, et plus particulièrement des télécommunications par fibres optiques.

La présente invention concerne un dispositif de limitation du bruit de phase non-linéaire affectant un signal optique modulé en phase à amplitude constante transmis sur une ligne de transmission par fibre optique.

Elle s'applique en particulier à un signal optique modulé en phase à amplitude ou puissance constante, notamment selon un format de type M-PSK (Phase Shift Keying), par exemple de type B-PSK (Binary), Q-PSK (Quaternary) ou encore 2^{N}-PSK.

Ce type de format est de plus en plus utilisé aujourd'hui pour les transmissions par fibres optiques longues distances. Un avantage de ce type de format est qu'il peut être couplé à une détection cohérente et à des algorithmes de traitement du signal numérique (DSP en anglais pour Digital Signal Processing) mis en oeuvre dans un circuit électronique dédié, ce qui permet de compenser les imperfections introduites par le canal de propagation, comme la dispersion chromatique (DC) et la PMD (Polarization Mode Dispersion) accumulées le long de la ligne de transmission par le signal optique.

En effet, la détection cohérente est linéaire vis-à-vis du signal et permet d'accéder à l'amplitude et à la phase du signal optique, et d'en corriger, si nécessaire, les imperfections (notamment la DC et la PMD) numériquement via de tels algorithmes de DSP. Au contraire, la détection quadratique est proportionnelle au carré du champ du signal optique, ce qui a pour effet d'effacer l'information de phase. Elle ne permet donc pas d'effectuer un traitement du signal numérique efficace, ni de compenser la DC et la PMD.

Les modulations de phase de type M-PSK sont en outre des modulations multi-niveaux qui présentent l'avantage d'avoir un débit symbole inférieur au débit binaire, ce qui permet une montée en débit supérieure à celle permise par les composants RF et opto-électroniques de la ligne de transmission. En effet, de tels composants sont limités en bande passante électrique à des fréquences bien inférieures à 100 GHz (typiquement 50 Ghz aujourd'hui). Ainsi, des lignes de transmission à 100 Gb/s sont aujourd'hui réalisables avec un format M-PSK, alors qu'elles ne le sont pas avec un format implémentant une modulation d'amplitude dite OOK (pour On-Off Keying) pour laquelle le débit symbole est égal au débit binaire.

Un inconvénient majeur du format modulé en phase de type M-PSK est d'être sensible aux distorsions introduites par les effets non linéaires excités dans la fibre optique de transmission, en particulier à l'effet Kerr.

L'effet Kerr est responsable d'une modulation de l'indice de réfraction de la fibre optique de transmission fonction de l'intensité du signal optique transmis. Une telle modulation provoque une variation de la phase du signal optique transmis qui dépend de sa puissance.

L'effet Kerr est excité par le bruit d'amplitude affectant le signal optique, lui-même engendré par le bruit d'émission spontanée amplifié (ou ASE en anglais pour Amplified Spontaneous Emission) généré par la cascade d'amplificateurs optiques régulièrement introduits le long de la ligne de transmission pour régénérer l'amplitude du signal optique transmis. Les fluctuations d'amplitude ou bruit d'amplitude générées par le bruit ASE affectent le signal optique en agissant sur l'indice de réfraction de la fibre optique via l'effet Kerr. Elles créent des fluctuations de la phase (ou bruit de phase) du signal proportionnelles à la puissance instantanée de ce dernier. Ces fluctuations de phase sont d'autant plus grandes que la puissance instantanée du signal optique est plus élevée. Or, avec une modulation de type M-PSK, c'est la phase du signal optique qui porte les données binaires d'information utile. Il en résulte que ce bruit de phase non-linéaire va progressivement polluer l'information utile portée par le signal optique.

Le document EP1544669 décrit un procédé et un dispositif de limitation de bruit de phase généré par une ligne de transmission par fibre optique sur un signal optique modulé selon le format D-PSK (pour Differential Phase Shift Keying). Un tel dispositif comprend des moyens de conversion du signal optique transmis en un signal modulé en amplitude de type OOK. Une telle conversion de format a pour effet de convertir aussi le bruit de phase en bruit d'amplitude affectant les "1" et les "0" du signal OOK.

Le dispositif de limitation comprend en outre des moyens de suppression des fluctuations d'amplitude sur les symboles 0 et sur les symboles 1 du signal converti et des moyens de conversion inverse du signal converti en un signal modulé en phase après suppression des fluctuations d'amplitude.

Selon un mode de réalisation, les moyens de suppression de fluctuations d'amplitude sont réalisés par un absorbant saturable idéal afin de stabiliser les fluctuations d'amplitude sur les "1" et les "0" du signal optique de type OOK. Il s'agit d'un composant optique passif simple à mettre en oeuvre.

Un premier inconvénient d'un tel dispositif est qu'il nécessite une suppression des fluctuations d'amplitude sur les deux niveaux d'intensité "1" et "0", ce qui est difficile à réaliser, car cette suppression à deux niveaux exige de l'absorbant saturable qu'il présente une fonction de transfert proche de l'idéal en forme de marche d'escalier. Or les composants existants assurent un nettoyage très efficace des "0" mais ils sont moins performants sur les niveaux "1 ".

Un deuxième inconvénient d'un tel dispositif est sa complexité et son coût, dus à la présence de deux convertisseurs phase-amplitude et amplitude-phase.

L'article « Performance Improvement of Phase-Shift-Keying Signal Transmission By Means of Optical Limiters Using Four-Wave Miximing in Fibers" de Matsumoto, JOURNAL OF LIGHTWAVE TECHNOLOGY, IEEE SERVICE CENTER, NY, US, publié le 1er septembre 2005, décrit un système de transmission s'attachant à réduire le bruit de phase non-linéaire au moyen de l'insertion régulière de limiteurs optiques basés sur l'effet FWM, composés d'un amplificateur d'entrée, d'une fibre optique de type HLNF couplée à une pompe optique et d'un filtre optique de sortie, ce qui induit une consommation d'énergie supplémentaire, due aux composants optiques actifs utilisés dans ce type de limiteur optique, proportionnelle au nombre de limiteurs optiques ainsi insérés.

### Exposé de l'invention

L'invention vient améliorer la situation à l'aide d'un dispositif de limitation du bruit de phase non-linéaire affectant un signal optique modulé en phase à amplitude moyenne constante transmis sur une ligne de transmission.

Selon l'invention, ledit dispositif étant placé en un point de dispersion nulle de la ligne de transmission, il est apte à mettre en oeuvre des moyens de suppression des fluctuations d'amplitude dudit signal optique autour de sa valeur moyenne.

Le signal optique émis en entrée de la ligne de transmission présentait une valeur d'amplitude constante, les informations utiles étant portées par la modulation de phase. Au cours de la transmission sur une partie de la ligne, des fluctuations d'amplitude sont apparues autour de sa valeur constante d'entrée. En supprimant les fluctuations d'amplitude autour de cette valeur d'amplitude moyenne du signal optique transmis, le dispositif selon l'invention permet de maintenir l'amplitude du signal optique constante et donc de limiter l'accumulation du bruit de phase non-linéaire dû au bruit d'ASE sur un tronçon de fibre optique aval de la ligne de transmission. En effet, ce sont les fluctuations d'amplitude qui, en modifiant l'indice non linéaire de la fibre optique de la ligne de transmission, génèrent un bruit de phase d'une valeur proportionnelle à la puissance du signal optique. En supprimant les fluctuations d'amplitude sur le signal présenté en entrée d'un tronçon aval de fibre optique, le dispositif selon l'invention supprime la cause d'apparition du bruit de phase supplémentaire.

Un tel dispositif est placé en un point de dispersion chromatique cumulée nulle, c'est-à-dire en un point où l'action de la dispersion chromatique sur le signal optique transmis est nulle. En un tel point, les fluctuations d'amplitude du signal optique transmis sont dues uniquement au bruit d'ASE des amplificateurs optiques de la ligne de transmission.

Ainsi, l'invention repose sur une approche tout à fait nouvelle et inventive qui permet de limiter l'accumulation de bruit de phase tout au long d'une ligne de transmission, en nettoyant directement le signal optique modulé en phase, de façon à présenter en entrée d'un tronçon de fibre optique un signal optique modulé en phase dont l'amplitude est constante, sans fluctuations d'amplitude à l'origine de la génération de bruit de phase non linéaire.

On comprendra que, si du bruit de phase s'est accumulé en amont du dispositif selon l'invention, il ne sera pas supprimé, mais le dispositif permet d'éviter que du bruit de phase supplémentaire ne s'accumule en aval du dispositif.

Avec l'invention, il n'est donc plus nécessaire de procéder à une conversion du signal optique en un signal modulé en amplitude, par exemple selon le format de modulation d'amplitude OOK.

L'invention propose ainsi une solution pour limiter l'accumulation du bruit de phase non-linéaire dans un signal optique transmis sur une ligne de transmission à fibre optique, qui est plus simple et moins coûteuse.

Selon un aspect de l'invention, les moyens de suppression des fluctuations d'amplitude sont aptes à transformer un signal d'entrée présentant une amplitude moyenne comprise dans un intervalle prédéterminé en un signal de sortie présentant une amplitude de sortie constante.

On comprend que les moyens de suppression des fluctuations d'amplitude selon l'invention présentent une fonction de transfert en marche d'escalier qui écrête les fluctuations d'amplitude autour d'un certain niveau d'amplitude d'entrée et fournit une amplitude de sortie constante.

Selon un aspect de l'invention, les moyens de suppression des fluctuations d'amplitude sont réalisés par un composant de type transparent saturable.

Un transparent saturable est un composant optique adapté à fournir, pour un signal optique d'entrée de puissance Pᵢₙ supérieure à un seuil prédéterminé Pᵢₙ₁, un signal de sortie de puissance constante P_{out 1}. Par conséquent, il réalise, pour une puissance d'entrée incluse dans un intervalle de valeurs donné, la fonction de transfert en marche d'escalier qui coupe les fluctuations d'amplitude du signal d'entrée situées au-delà du seuil de puissance Pᵢₙ₁. Un tel composant est connu de l'homme de métier et décrit en détails dans le document intitulé "New Passive All-Optical Semiconductor Device for Bit-1 level noise reduction" par Oudar et al, publié dans les proceedings de la conférence Européenne "Lasers and Electro-Optics and the International Quantum Electronics CLEOE-IQEC 2007" en juin 2007.

L'invention concerne en outre un procédé de limitation du bruit de phase non-linéaire dans un signal optique modulé en phase à amplitude moyenne constante transmis sur une ligne de transmission.

Selon l'invention, ledit procédé met en oeuvre, en un point de dispersion nulle de la ligne de transmission, une étape de suppression des fluctuations d'amplitude dudit signal autour de sa valeur moyenne.

L'invention concerne enfin un système de transmission par fibre optique (ligne de transmission) comprenant au moins un premier et un deuxième modules de transmission comprenant, le premier module de transmission comprenant :
- un tronçon (ou span en anglais) de fibre optique de transmission apte à transmettre le signal optique;
- des moyens d'amplification en ligne aptes à amplifier ledit signal optique en sortie du span de fibre optique;
- des moyens de compensation de dispersion chromatique aptes à fournir un signal optique amplifié pour lequel les effets de la dispersion chromatique sont annulés.

Selon l'invention, un tel système comprend en sortie des moyens de compensation du premier module de transmission un dispositif de limitation du bruit de phase non-linéaire selon l'invention.

Le point de sortie des moyens de compensation de dispersion chromatique constitue un point de dispersion nulle. C'est en ce point que l'on peut placer un dispositif de limitation du bruit de phase non-linéaire selon l'invention. On notera qu'un tel système peut comprendre une pluralité de modules de transmission. Dans ce cas, il dispose d'une pluralité de points de dispersion cumulée nulle, localisés régulièrement le long de la ligne de transmission. Ces points constituent des emplacements potentiels pour un dispositif de limitation du bruit de phase non-linéaire selon l'invention. Selon l'invention, un ou plusieurs dispositifs de limitation du bruit de phase peuvent donc avantageusement être placés en ces points, mais pas nécessairement en chaque point de dispersion nulle de la ligne de transmission.

De façon avantageuse, un nombre de dispositifs de limitation de bruit de phase suffisant sur la ligne de transmission pour obtenir une limitation satisfaisante du bruit de phase non-linéaire est défini par des règles d'ingénierie de l'opérateur du réseau de transmission optique.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente un dispositif de limitation du bruit de phase non-linéaire selon l'invention dans son environnement;
- la figure 2 présente les étapes du procédé de limitation de bruit de phase selon l'invention;
- la figure 3 illustre l'évolution du bruit de phase non linéaire sur une ligne de transmission sans et avec l'invention;
   la figure 4 illustre la fonction de transfert d'un transparent saturable mis en oeuvre par le dispositif de limitation du bruit de phase non-linéaire selon un aspect de l'invention; et
- la figure 5 présente de façon schématique un exemple de système de transmission optique selon l'invention.

### Description d'un mode de réalisation particulier de l'invention

Le principe général de l'invention repose sur la suppression des fluctuations d'amplitude autour de la valeur moyenne d'amplitude du signal optique modulé en phase et transmis sur une ligne de transmission par fibre optique. Une telle suppression des fluctuations permet de maintenir la puissance du signal optique constante et ainsi de limiter la génération de bruit de phase non-linéaire au cours de la propagation par interaction du signal modulé en phase avec la fibre optique et excitation d'effets non linéaires.

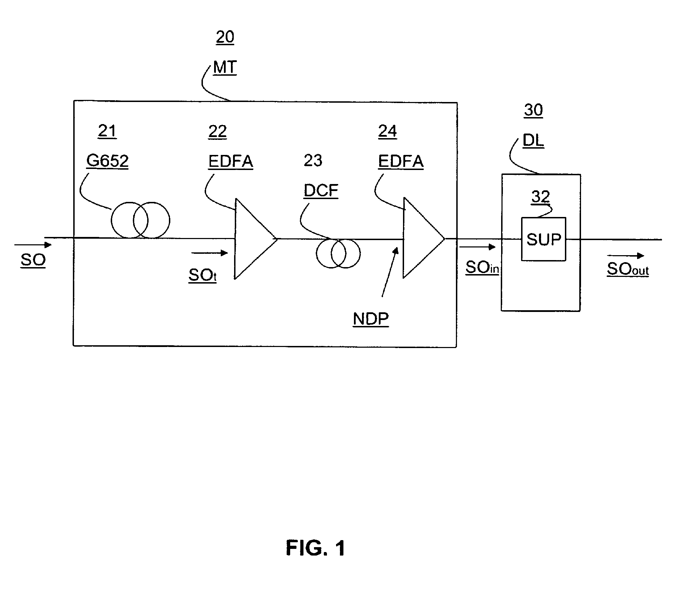

En relation avec la **figure 1****,** on présente de façon schématique un dispositif de limitation du bruit de phase DL 30 selon l'invention, dans son environnement. Dans l'exemple de la figure 1, on a représenté une portion d'une ligne de transmission comprenant un module de transmission 20 et le dispositif DL 30 selon l'invention. Un tel tronçon peut être placé n'importe où sur la ligne de transmission entre l'émetteur et le récepteur.

Dans cet exemple, le signal optique est porté sur une longueur de 1550 nm.

Le signal optique est alors nettoyé par les moyens SUP 32 de suppression des fluctuations d'amplitude autour d'une valeur d'amplitude moyenne. Le signal optique de sortie SOₒᵤₜ obtenu est transmis sur la ligne de transmission.

Selon l'invention, le dispositif de limitation du bruit de phase 30 est placé en un point de dispersion nulle NDP, c'est-à-dire en un point où les effets de la dispersion chromatique ont été annulés. Une telle compensation est mise en oeuvre en amont du dispositif de limitation du bruit de phase non-linéaire DL 30, de façon connue de l'homme de métier, par exemple au sein d'un module de transmission MT tel que celui de la figure 1.

Un tel module MT comprend généralement un span de fibre optique 21 de transmission. Il s'agit, à titre d'exemple, d'une fibre standard SSMF (Standard Single-Mode Fiber en anglais). Il peut s'agir également d'une fibre LEAF^{™} (Large effective Area Fiber) ou TRUE WAVE^{™} ou encore toute autre fibre optique de ligne à dispersion chromatique positive. Un tel tronçon peut avoir une longueur d'une centaine de kilomètres. Il est suivi d'un amplificateur optique 22 en ligne de type EDFA (Erbium Doped Fiber Amplifier) qui fonctionne sur la bande C. cet amplificateur a pour but d'amplifier le signal optique qui a subi des atténuations de sa valeur d'amplitude moyenne lors de la transmission sur la fibre optique 21 et qui doit être régénéré régulièrement.

On notera toutefois que tout autre type d'amplificateur, notamment Raman pourrait être utilisé.

Le module de transmission MT comprend aussi des moyens de compensation de la dispersion chromatique, typiquement une fibre DCF 23 (Dispersion Compensating Fiber), à dispersion chromatique négative, dont la longueur est choisie de façon à ce qu'elle compense exactement la dispersion chromatique accumulée par le signal optique dans la fibre 21. Il en résulte que la sortie de la fibre de compensation DCF constitue un point de dispersion nulle NDP. En ce point, le signal optique modulé transmis présente une valeur d'amplitude moyenne qui est constante, à laquelle se superpose le bruit d'ASE.

On notera que le module de transmission MT peut comprendre aussi un deuxième amplificateur 24 placé en aval de la fibre de compensation DCF 23, qui permet de fournir en sortie un signal optique dont le niveau d'amplitude est adapté au niveau d'amplitude d'entrée requis par les moyens de suppression de fluctuations d'amplitude 32 selon l'invention.

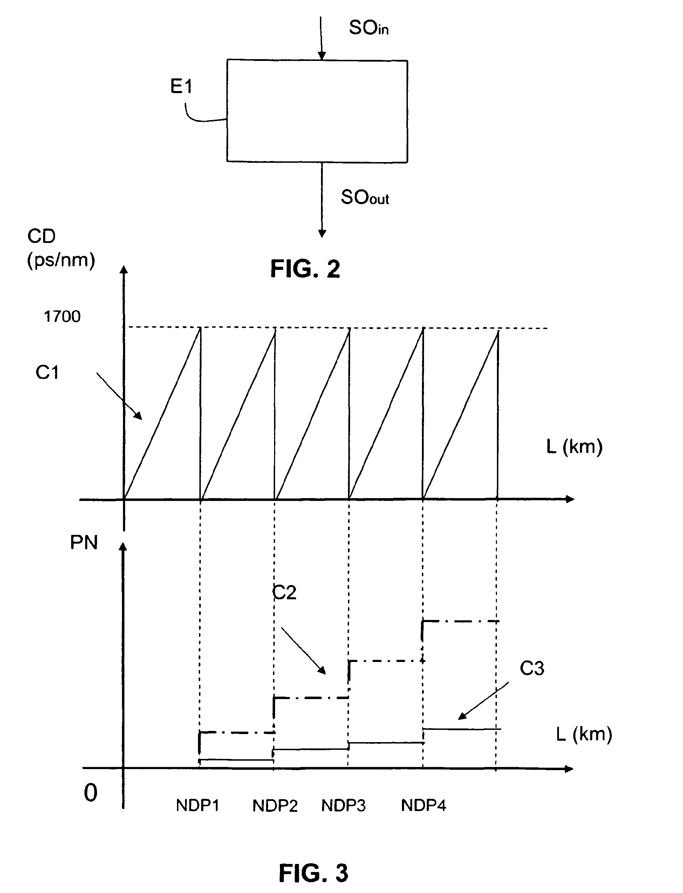

Le dispositif de limitation du bruit de phase DL 30 selon l'invention met en oeuvre les étapes d'un procédé de limitation du bruit de phase non linéaire, qui va maintenant être décrit en relation avec la **figure 2****.**

Un tel procédé met en oeuvre, sur réception d'un signal optique d'entrée SOᵢₙ une étape de suppression des fluctuations d'amplitude affectant le signal optique de type M-PSK. Le signal optique de sortie SOₒᵤₜ obtenu est "nettoyé", ce qui a pour effet d'éviter la génération de bruit de phase non-linéaire dans la partie avale de la ligne de transmission et donc son accumulation le long de cette ligne.

En relation avec la **figure 3****,** on présente de façon schématique une première courbe C1 d'évolution de la dispersion chromatique le long de la ligne de transmission. Elle met en évidence une succession de pics de dispersion chromatique (en amont des moyens de compensation de la DC) et de points de dispersion nullle NDP1 à NDP4. Une deuxième courbe C2 montre de façon schématique un exemple d'évolution du bruit de phase non linéaire le long de la ligne de transmission en l'absence de dispositifs selon l'invention. On voit que le niveau de bruit augmente rapidement après chaque tronçon de fibre. Une troisième courbe C3 montre un exemple d'évolution du bruit de phase lorsqu'on place des dispositifs de limitation de bruit de phase selon l'invention aux points de dispersion nulle NDP1 à NDP4. L'augmentation du niveau de bruit de phase non linéaire est beaucoup plus limitée. On notera qu'en fonction des règles d'ingénierie appliquées par l'opérateur et du choix des tronçons de fibres de transmission, il est possible d'empêcher complètement l'apparition de bruit de phase non linéaire entre deux dispositifs selon l'invention.

Selon un aspect de l'invention, les moyens de suppression DL30 des fluctuations d'amplitude comprennent un composant optique de type transparent saturable, réalisé en insérant un absorbant saturable dans une cavité constituant un interféromètre à ondes multiples. Ce dispositif écrête la puissance, qui est le module du carré de l'amplitude du champ électrique du signal à une valeur constante P_{out 1}lorsque le signal optique reçu présente une puissance Pᵢₙ d'entrée dans le dispositif qui est supérieure à un seuil prédéterminé Pᵢₙ₁.

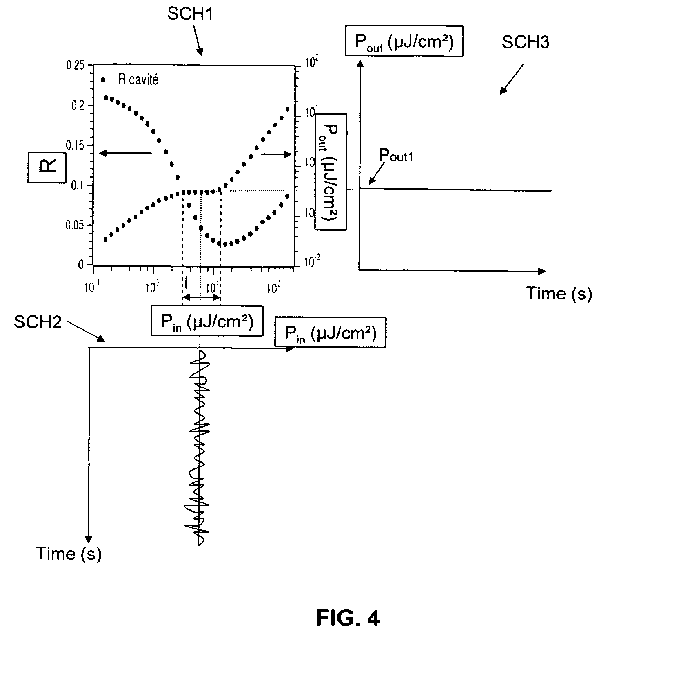

En relation avec la **figure 4****,** on présente une fonction de transfert d'un transparent saturable ainsi constitué. Le schéma SCH₁ illustre une évolution de la réflectivité R de la cavité ainsi que de la puissance de sortie du dispositif Pₒᵤₜ en fonction de la puissance Pᵢₙ du signal optique d'entrée. Il montre que la courbe d'évolution de la puissance Pₒᵤₜ de sortie du dispositif en fonction de la puissance Pᵢₙ du signal optique d'entrée présente un palier P_{out 1} pour un intervalle I de valeurs de la puissance d'entrée. Le schéma SCH₂ illustre les fluctuations de la valeur moyenne de la puissance d'entrée Pᵢₙ, lorsque sa valeur est incluse dans l'intervalle 1. Le schéma SCH3 met en évidence le fait que le transparent saturable supprime les fluctuations d'amplitude autour de la valeur Pᵢₙ₁ et fournit un signal de sortie dont la puissance est constante à la valeur Pₒᵤₜ₁.

Un exemple de système de transmission optique selon l'invention va maintenant être présenté en relation avec la figure 4. Le système de transmission OTS 100 comprend un émetteur Tx 10 apte à émettre un signal optique SO modulé en phase selon un format de type M-PSK. Il comprend en outre une pluralité de modules de transmission MT1 à MTN, N entier supérieur ou égal à 1. Dans l'exemple de la figure 4, on a choisi N égal à 6, mais l'invention n'est pas limitée à ce cas particulier. Ils sont disposés en groupes, un premier groupe formé du module de transmission MT 201 qui fournit un point de dispersion nulle NDP1, un deuxième groupe formé des modules MT 20₂, 20₃ et 20₄ en sortie duquel se trouve le point de dispersion nulle NDP2 et un troisième groupe formé des modules MT 20₅, 20₆ à l'issue duquel se trouve le point de dispersion nulle NDP3.

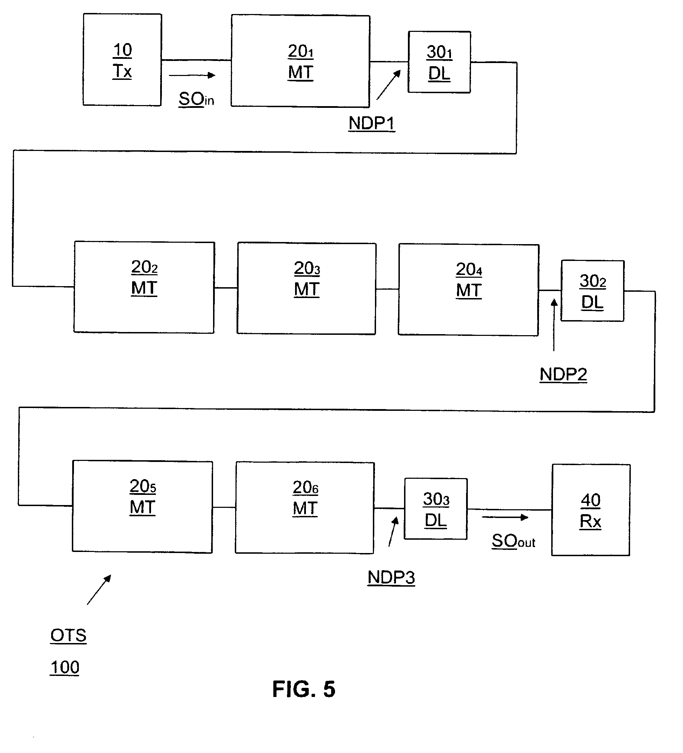

Selon l'invention, le système de transmission 100 comprend une pluralité de dispositifs DL 30 de limitation du bruit de phase non-linéaire, placés régulièrement le long de la ligne de transmission. Dans l'exemple de la **figure 5****,** 3 dispositifs DL 30₁, 30₂, 30₃ sont représentés. Ils sont placés respectivement aux points de dispersion nulle NDP1, NDP2 et NDP3.

Le système de transmission OTS comprend enfin un récepteur Rx 40 apte à recevoir le signal optique transmis SOₒᵤₜ.

On notera toutefois que l'invention n'est pas limitée à cet exemple de configuration d'un système de transmission. L'exemple de la figure 5 vise à illustrer les points suivants :
- le dispositif de limitation du bruit de phase non-linéaire selon l'invention doit être placé en un point de dispersion nulle;
- un tel point de dispersion nulle peut avantageusement être fourni par un module de transmission tel que décrit précédemment;
- il n'est pas forcément nécessaire de placer un dispositif de limitation du bruit de phase non-linéaire selon l'invention en chaque point de dispersion nulle disponible le long de la ligne de transmission. Autrement dit, un système de transmission selon l'invention peut comprendre une séquence de plusieurs modules de transmission suivie d'un unique dispositif de limitation du bruit de phase non-linéaire; et
- les dispositifs de limitation du bruit de phase non-linéaire selon l'invention seront avantageusement placés régulièrement le long de la ligne de transmission, leur nombre et leur disposition étant fixés par des règles d'ingénierie du réseau pour réaliser un compromis entre coût et performances.

## Revendications

1. Dispositif de limitation (30) du bruit de phase non-linéaire affectant un signal optique d'entrée modulé en phase à amplitude moyenne constante transmis sur une ligne de transmission, **caractérisé en ce que** ledit dispositif
est apte à mettre en oeuvre des moyens de suppression (32) des fluctuations d'amplitude dudit signal optique autour d'une valeur moyenne lorsqu'il est placé en un point de dispersion nulle (NDP1) de la ligne de transmission, ces moyens étant réalisés par une cavité constituant un interféromètre à ondes multiples et comprenant un absorbant saturable

2. Dispositif de limitation du bruit de phase non-linéaire selon la revendication 1, **caractérisé en ce que** les moyens de suppression des fluctuations d'amplitude sont aptes à transformer un signal d'entrée (SOin) présentant une amplitude moyenne comprise dans un intervalle prédéterminé en un signal de sortie (SOout) présentant une amplitude de sortie constante.

3. Procédé de limitation du bruit de phase non-linéaire d'un signal optique modulé en phase à amplitude moyenne constante transmis sur une ligne de transmission, **caractérisé en ce que** ledit procédé met en oeuvre, en un point de dispersion nulle (NDP1) de la ligne de transmission, une étape de suppression des fluctuations d'amplitude dudit signal autour de sa valeur moyenne, au moyen d'une cavité constituant un interféromètre à
ondes multiples et comprenant un absorbant saturable.

4. Système de transmission par fibre optique comprenant :
- un émetteur apte à émettre un signal optique modulé en phase à amplitude constante;
- au moins un module de transmission, comprenant :
- un tronçon de fibre optique de transmission (21) apte à transmettre le signal optique;
- des moyens d'amplification en ligne (22) aptes à amplifier ledit signal optique en sortie du tronçon de fibre optique;
- des moyens de compensation (23) de la dispersion chromatique accumulée par le signal optique dans ledit tronçon de fibre optique de transmission aptes à fournir un signal optique amplifié pour lequel les effets de la dispersion chromatiques sont annulés, lesdits moyens de compensation étant placés après le tronçon de fibre optique de transmission et les moyens d'amplification en ligne;
**caractérisé en ce qu'**il comprend au moins un dispositif de limitation de bruit de phase (30), placé en sortie dudit module de transmission, ledit dispositif comprenant des moyens de suppression de fluctuations (32) d'une amplitude dudit signal optique détecté autour d'une valeur moyenne, ces moyens étant réalisés par une cavité constituant un interféromètre
à ondes multiples et comprenant un absorbant saturable.

## Claims

1. Device (30) for limiting the non-linear phase noise affecting a constant mean amplitude phase-modulated input optical signal transmitted on a transmission line, **characterized in that** said device is able to implement means (32) for suppressing the amplitude fluctuations of said optical signal around a mean value when it is placed at a point of zero dispersion (NDP1) of the transmission line, these means being embodied by a cavity constituting a multiple-wave interferometer and comprising a saturable absorbent.

2. Device for limiting the non-linear phase noise according to Claim 1, **characterized in that** the means for suppressing the amplitude fluctuations are able to transform an input signal (SOin) exhibiting a mean amplitude included in a predetermined interval into an output signal (SOout) exhibiting a constant output amplitude.

3. Method for limiting the non-linear phase noise of a constant mean amplitude phase-modulated optical signal transmitted on a transmission line, **characterized in that** said method implements, at a point of zero dispersion (NDP1) of the transmission line, a step of suppressing the amplitude fluctuations of said signal around its mean value by means of a cavity constituting a multiple-wave interferometer and comprising a saturable absorbent.

4. Fibre optic transmission system comprising:
- an emitter able to emit a constant amplitude phase-modulated optical signal;
- at least one transmission module, comprising:
- a stretch of optical transmission fibre (21) able to transmit the optical signal;
- in-line amplifying means (22) able to amplify said optical signal at the output of the stretch of optical fibre;
- means (23) for compensating for the chromatic dispersion accumulated by the optical signal in said stretch of optical transmission fibre and which are able to provide an amplified optical signal for which the chromatic dispersion effects are cancelled, said compensating means being placed after the stretch of optical transmission fibre and the in-line amplifying means;
**characterized in that** it comprises at least one device for limiting phase noise (30), placed at the output of said transmission module, said device comprising means (32) for suppressing fluctuations of an amplitude of said detected optical signal around a mean value, these means being embodied by a cavity constituting a multiple-wave interferometer and comprising a saturable absorbent.

## Patentansprüche

1. Vorrichtung zur Begrenzung (30) des nichtlinearen Phasenrauschens, das sich auf ein phasenmoduliertes optisches Eingangssignal mit konstanter mittlerer Amplitude auswirkt, das auf einer Übertragungsleitung übertragen wird, **dadurch gekennzeichnet, dass** die Vorrichtung geeignet ist, Mittel zur Unterdrückung (32) der Amplitudenschwankungen des optischen Signals um einen Mittelwert einzusetzen, wenn sie in einem Punkt mit Dispersion null (NDP1) der Übertragungsleitung angeordnet ist, wobei diese Mittel durch einen Hohlraum realisiert sind, der ein Mehrwellen-Interferometer bildet und ein sättigbares Absorbermaterial aufweist.

2. Vorrichtung zur Begrenzung des nichtlinearen Phasenrauschens nach Anspruch 1, **dadurch gekennzeichnet, dass** die Mittel zur Unterdrückung der Amplitudenschwankungen geeignet sind, ein Eingangssignal (SOin), das eine in einem vorbestimmten Intervall enthaltene mittlere Amplitude aufweist, in ein Ausgangssignal (SOout) umzuwandeln, das eine konstante Ausgangsamplitude aufweist.

3. Verfahren zur Begrenzung des nichtlinearen Phasenrauschens eines phasenmodulierten optischen Signals mit konstanter mittlerer Amplitude, das auf einer Übertragungsleitung übertragen wird, **dadurch gekennzeichnet, dass** das Verfahren in einem Punkt mit Dispersion null (NDP1) der Übertragungsleitung einen Schritt zur Unterdrückung der Amplitudenschwankungen des Signals um seinen Mittelwert durchführt, mittels eines Hohlraums, der ein Mehrwellen-Interferometer bildet und ein sättigbares Absorbermaterial aufweist.

4. System zur Übertragung über einen Lichtwellenleiter, welches Folgendes aufweist:
- einen Sender, der geeignet ist, ein phasenmoduliertes optisches Signal mit konstanter Amplitude zu senden;
- mindestens ein Übertragungsmodul, welches Folgendes aufweist:
- ein Übertragungs-Lichtwellenleiterstück (21), das geeignet ist, das optische Signal zu übertragen;
- Linienverstärkungsmittel (22), die geeignet sind, das optische Signal am Ausgang des Lichtwellenleiterstücks zu verstärken;
- Mittel zur Kompensation (23) der durch das optische Signal in dem Übertragungs-Lichtwellenleiterstück akkumulierten chromatischen Dispersion, die geeignet sind, ein verstärktes optisches Signal zu liefern, für welches die Wirkungen der chromatischen Dispersion aufgehoben sind, wobei die Mittel zur Kompensation nach dem Übertragungs-Lichtwellenleiterstück und den Linienverstärkungsmitteln angeordnet sind,
**dadurch gekennzeichnet, dass** es mindestens eine Vorrichtung zur Begrenzung des Phasenrauschens (30) aufweist, die am Ausgang des Übertragungsmoduls angeordnet ist, wobei die Vorrichtung Mittel zur Unterdrückung von Schwankungen (32) einer Amplitude des detektierten optischen Signals um einen Mittelwert aufweist, wobei diese Mittel durch einen Hohlraum realisiert sind, der ein Mehrwellen-Interferometer bildet und ein sättigbares Absorbermaterial aufweist.
